# EUROPEAN PATENT APPLICATION

(11) **EP 4 344 286 A1**
(43) Date of publication of application: **27.03.2024**
(21) Application number: 23198262.0
(22) Date of filing: 19.09.2023
(51) Int. Cl.: H04W 24/02, G06N 3/04, G06N 3/08, H04W 36/00

(54) **ENHANCING WIRELESS COMMUNICATIONS EFFICIENCY IN 5G/6G NETWORKS THROUGH AI/ML MODEL MANAGEMENT AND DEPLOYMENT**

(30) Priority: 22.09.2022 US 202263376625 P; 18.09.2023 US 202318469492
(71) Applicant: MediaTek Inc., 30078 Hsinchu City (TW)
(72) Inventor: ROY, Abhishek, San Jose, 95134 (US); BI, Hao, San Jose, 95134 (US); HSU, Chia-Chun, 30078 Hsinchu City (TW)
(74) Representative: Hoefer & Partner Patentanwälte mbB

(57) **Abstract**

This invention presents methods leveraging artificial intelligence and machine learning (AI/ML) models to enhance wireless communications efficiency in 5G/6G networks. The processes involve storing, configuring, and transferring AI/ML models within base stations and user equipment devices (UE), allowing for localized decision-making and improved network performance. Features include dynamic model activation/deactivation, model compression/decompression, and encoding/decoding method negotiation. Periodic or condition-driven model updates ensure responsiveness to network changes, while model replacements enable upgrades and iterations. The system facilitates seamless handovers between base stations, with information sharing about model capabilities and UE specifics. Model storage and configuration can also occur in the UE, empowering it for local decision-making in variable or challenging network conditions. The techniques contribute to significant performance, efficiency, and reliability improvements in 5G/6G wireless networks.

## Description

### CROSS REFERENCE TO RELATED APPLICATIONS

This application claims priority under 35 U.S.C. §119 from U.S. Provisional Application Number 63/376,625, entitled "AI-ML Model Storage in RAN and Delivery over RRC," filed on September 22, 2022, the subject matter of which is incorporated herein by reference.

### TECHNICAL FIELD

The disclosed embodiments relate generally to wireless network communications, and, more particularly, to providing improved efficiency of wireless communications in 5G/6G networks by use of artificial intelligence and machine learning (AI/ML) models.

### BACKGROUND

Artificial Intelligence (AI) has been increasingly integrated into cellular networks to improve overall efficiency and performance. Here are some known uses of AI in this field:

Network Optimization: AI can be used to optimize various aspects of the network, such as radio access network (RAN) optimization, reducing latency, improving signal quality, and enhancing user experience. AI models can learn from historical network data to predict and mitigate network congestion, optimize signal strength, and allocate resources more effectively.

Predictive Maintenance: Machine Learning (ML) algorithms can be used to predict network failures or faults based on historical data and real-time monitoring. This approach can significantly reduce downtime and ensure more reliable service.

Fraud Detection: AI can also be employed to detect anomalous patterns in data traffic, which might signify fraudulent activities or security breaches, helping to maintain network integrity and protect user data.

Energy Efficiency: AI can optimize the power usage of cellular networks, turning off certain network elements during low usage periods or optimizing the transmission power of base stations. This can significantly reduce the energy consumption of these networks, making them more sustainable.

Dynamic Spectrum Management: AI can be used to manage and allocate spectrum dynamically, improving the overall usage of scarce spectrum resources. This is particularly useful for 5G networks, which use a diverse range of spectrum bands.

Handover Management: AI can optimize the process of handing over a user from one base station to another, especially in high-speed scenarios like high-speed railways or highways. This can reduce call drop rates and improve the quality of service.

Network Slicing: In 5G networks, AI can help in creating dynamic network slices, which are logically separate networks tailored to the specific needs of a certain application or service. This can improve network efficiency and ensure the quality of service.

User Experience Prediction: By analyzing data about network conditions, device type, application type, and other factors, AI can predict the Quality of Experience (QoE) for users. This can help operators proactively manage network resources to ensure good user experience.

Beamforming in Massive MIMO: In 5G networks, AI can be used to optimize the process of beamforming in massive MIMO (Multiple Input Multiple Output) systems, which can enhance signal quality and data rates, particularly in densely populated urban areas.

In essence, the application of AI and ML in cellular networks can transform the way these networks are designed, operated, and maintained, leading to higher levels of automation, efficiency, and user satisfaction.

Artificial Intelligence (AI) models play a crucial role in managing and optimizing the performance of cellular networks, particularly in the context of 5G/6G technologies where intelligent connectivity is essential. These models, when installed and managed properly on both user equipment (UE) and base stations, allow for seamless communication, efficient resource allocation, and improved user experiences.

However, it is essential that the AI models on UEs and base stations be synchronized and harmonized. Misalignment or lack of synchronization between these two can lead to a number of issues and challenges that could potentially disrupt the operation of the network, including the following:

Inefficient Network Performance: If the AI model on a UE does not match with that on a base station, the network's performance could be affected. This misalignment could result in sub-optimal decision-making, poor resource allocation, and degraded network quality.

Miscommunication and Network Errors: Synchronization between the AI models on UEs and base stations is critical for clear communication. If the AI models are not in sync, this could result in misinterpretation of messages and signals, leading to network errors and miscommunications.

Handover Complications: During handover operations, when a UE moves from one base station to another, it's essential that the AI models are synchronized. If they aren't, it could result in inefficient handovers, dropped calls, or inconsistent connections.

Security Risks: When AI models are out of sync, there could be an increased risk of security threats. For instance, inconsistencies between models could be exploited by malicious actors to infiltrate the network, leading to data breaches or other security incidents.

Energy Inefficiencies: Synchronized AI models can ensure efficient energy consumption by optimizing signal strength, transmission power, and other energy-intensive processes. If these models are out of sync, it could result in unnecessary energy usage, reducing the overall sustainability of the network.

Poor User Experience: Ultimately, all the issues above culminate in a poor user experience. Whether it's slower network speeds, inconsistent connectivity, or security concerns, these could all result in dissatisfaction among users.

Therefore, it is crucial to manage and synchronize AI models on UEs and base stations to ensure the proper functioning of the network, maximize efficiency, and maintain a high level of user satisfaction.

Given the development of ML techniques, AI is becoming a viable option for handling the heterogeneity of 5G/6G wireless networks. As AI/ML algorithms are often model-driven, one major challenge in using AI/ML for wireless networks lies in efficient storing, monitoring, updating, and delivering AI/ML models over the wireless interfaces.

### SUMMARY

One fundamental challenge in using artificial intelligence and machine learning (AI/ML) models in 5G/6G wireless networks is how to efficiently store, monitor, update the AI/ML models and deliver those models between the gNB and UEs. Several constraints need to be considered while designing an efficient solution: The gNB and the UE need to use the same AI/ML model(s); AI/ML models need to be monitored to check possible changes; If the changes in the AI/ML models are beyond a certain threshold, the models need to be updated; Any update in the AI/ML model needs to be communicated between the gNB and the UEs; Once the UE performs hand over from the source gNB to the target gNB the AI/ML models from source gNB also needs to be transferred to the target gNB.

In one novel aspect, methods of leveraging AI/ML models to enhance wireless communications efficiency in 5G/6G networks are proposed. Methods and a UE according to the invention are defined in the independent claims. The dependent claims define preferred embodiments thereof. A UE includes a radio resource control (RRC) connection handling circuit that establishes an RRC connection with a first base station, a receiver circuit that receives a first AI/ML model that is broadcasted or groupcasted to multiple UEs by the first base station via RRC message(s), a memory circuit that stores the first AI/ML model, and a processor circuit that executes the first AI/ML model.

In one embodiment, the first AI/ML model includes a Convolution Neural Network (CNN), a Recurrent Neural Network (RNN), a Long Short Term Memory (LSTM), or a Transformer. Other AI/ML models are also possible. In another embodiment, the first AI/ML model is decompressed or decoded using a set of weights included in the first AI/ML model utilizing a Binary Weight Network (BNN), a Ternary Weight Network (TNN), a B-bit compression, a K-means Clustering, a model sparsification, a Huffman Coding, or a Golomb Coding.

Other embodiments and advantages are described in the detailed description below. This summary does not purport to define the invention. The invention is defined by the claims.

### BRIEF DESCRIPTION OF THE DRAWINGS

Figure 1 illustrates an exemplary wireless communication 5G/6G network with Artificial Intelligence / Machine Learning (AI/ML) model management and deployment in accordance with a novel aspect.
Figure 2 is a simplified block diagram of a wireless transmitting device and a receiving device in accordance with embodiments of the present invention.
Figure 3 illustrates an AI/ML model communication procedure between one or more UEs and a base station (gNB) with model storage, compression, and delivery.
Figure 4 illustrates an AI/ML model communication procedure between one or more UEs and a base station (gNB) with performance metric based AI/ML management, periodic AI/ML model updating, and UE environment based AI/ML model updating.
Figure 5 illustrates an AI/ML model communication procedure between one or more UEs, a first base station, and a second base station with mobility support and handover operation.
Figure 6 is a flow chart of a method of performing (AI/ML) model management and deployment from UE perspective in accordance with one novel aspect.
Figure 7 is a flow chart of a method of performing (AI/ML) model management and deployment from BS perspective in accordance with one novel aspect.

### DETAILED DESCRIPTION

Reference will now be made in detail to some embodiments of the invention, examples of which are illustrated in the accompanying drawings.

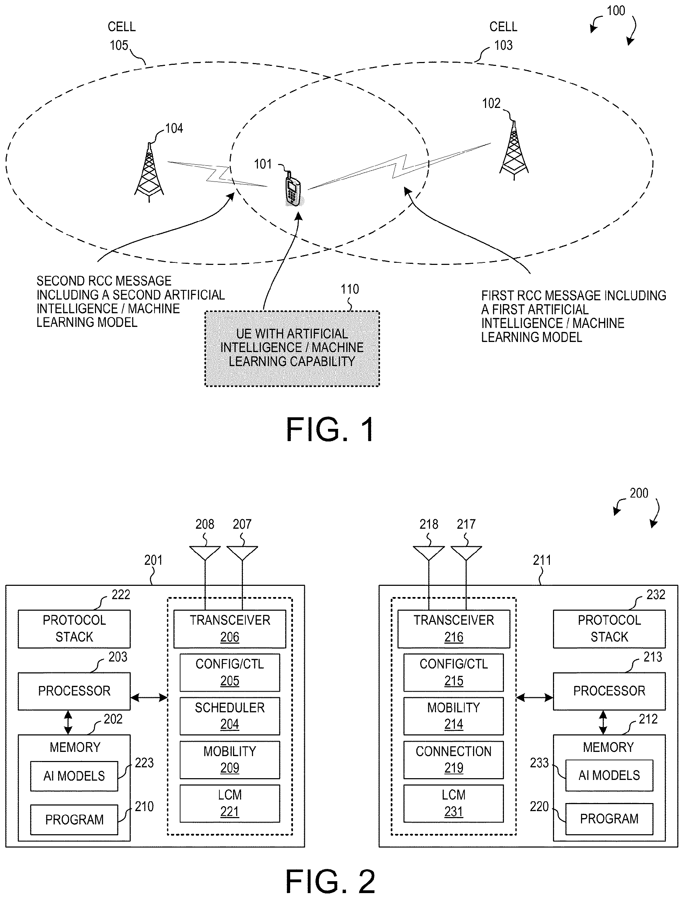

Figure 1 illustrates an exemplary wireless communication 5G/6G network with Artificial Intelligence / Machine Learning (AI/ML) model management and deployment in accordance with a novel aspect. The wireless communications system 100 includes one or more wireless communication networks, and each of the wireless communication networks has one or more base infrastructure units, such as gNodeB 102 and gNodeB 104, serving a plurality of User Equipments including UE 101. The base infrastructure units may also be referred to as an access point, an access terminal, a base station, an eNB, a gNB, or by other terminology used in the art. Each of the wireless communication base stations 102 and 104 serves a geographic area. The geographic area served by wireless communications base stations 102 and 104 overlaps in the example of Figure 1. UE 101 may be equipped with a radio frequency (RF) transceiver or multiple RF transceivers for different application services. UE 101 may be a smart phone, a wearable device, an Internet of Things (IoT) device, or a tablet, etc.

In one example, gNB 102 communicates with UE 101 via 5G or 6G wireless communication. Base station 102 provides wireless communication to multiple UEs within cell 103. In one example, gNB 104 communicates with UE 101 via 5G or 6G wireless communication. Base station 104 can communicate with multiple UEs within cell 105. Note that Figure 1 is an illustrative plot. The base station 102 and base station 104 can be co-located geographically. Also note both base stations can operate as both licensed cell and unlicensed cell, and as both primary cell as well as secondary cell.

Artificial intelligence/Machine Learning (AI/ML) models can be utilized to enhance the efficiency of wireless communication in 5G and 6G networks. The procedure commences with storing a first AI/ML model in gNB 102. This task benefits the system by providing a localized model for decision-making processes, thus optimizing the speed and responsiveness of the network. Following storage, the first AI/ML model is configured in gNB 102, a step that may involve activating or deactivating the model. This configuration feature enhances adaptability, allowing the network to respond dynamically to changing conditions by enabling or disabling the AI/ML model as required, contributing to overall network performance and resource management.

Once configured, the AI/ML model is then transmitted to UE 101 through a first downlink Radio Resource Control (RRC) message. As depicted by 110, UE 101 has AI/ML capability. This downlink transmission allows UE 101 to have a local copy of the model, thereby facilitating more efficient local decision-making processes and enhancing the overall user experience with improved network performance. Before being sent to UE 101, the first AI/ML model may be compressed by base station 102. This reduces the bandwidth required for transmission, thus saving network resources. Decompression then occurs at the UE 101 so that the model is ready for application. Additionally, an AI/ML model encoding or decoding method can be negotiated between UE 101 and base station 102. This feature allows for more efficient coding practices tailored to the specific capabilities of the base station and the UE, leading to optimized network communications.

The stored AI/ML model at base station 102 is updated periodically or when a network metric value surpasses or drops below a predetermined threshold. This ensures that the AI/ML model remains current and responsive to changes in network conditions, resulting in enhanced network performance and reliability. Base station 102 also checks if it is storing a second AI/ML model. If it does, the second AI/ML model is communicated to UE 101 and the first AI/ML model stored on the UE is replaced by the second model. This capability offers an avenue for model iteration and upgrade, ensuring that the most efficient model is available for network decisions, thereby maintaining optimal network performance.

The same procedure may be performed by the UE 101, whereby the UE 101 stores the AI/ML model and updates the AI/ML model periodically or when a network performance metric value surpasses or drops below a predetermined threshold value. Further, UE 101 can update the AI/ML model upon determining that a UE scenario, configuration, site location, or performance metric has changed. UE 101 can also configure, activate and de-activate the AI/ML models. Any update in the AI/ML model is delivered from the UE to the network via RRC message(s), with or without compression/encoding. UE 101 can also report its AI/ML capability to the network.

During a handover operation, which occurs when UE 101 shifts from the coverage of base station 102 to base station 104, the first AI/ML model is transferred from the first base station 102 to the second base station 104. This feature ensures continuity of service, minimizing disruption to the user and optimizing network performance during such transitions.

In preparation for a handover of the UE 101 from base station 102 to base station 104, the first base station 102 provides the second base station 104 with information about UE capabilities of AI/ML model, UE identification information such as the UE type, vendor, modem type, or chipset, and the AI/ML model configuration. This feature enables better network planning, resulting in smoother handovers, fewer dropped connections, and a more stable user experience.

This entire process, from AI/ML model storage to configuration and transmission, can also be mirrored in the UE 101, thereby endowing the UE with robust capabilities for local decision-making. This can greatly enhance the user experience, particularly in environments where network conditions are variable or challenging. Overall, the described methods offer significant benefits for the performance, efficiency, and reliability of 5G/6G wireless networks.

Figure 2 is a simplified block diagram of wireless devices 201 and 211 in accordance with embodiments of the present invention. For wireless device 201 (e.g., a transmitting device), antennae 207 and 208 transmit and receive radio signal. RF transceiver module 206, coupled with the antennae, receives RF signals from the antennae, converts them to baseband signals and sends them to processor 203. RF transceiver 206 also converts received baseband signals from the processor, converts them to RF signals, and sends out to antennae 207 and 208. Processor 203 processes the received baseband signals and invokes different functional modules and circuits to perform features in wireless device 201. Memory 202 stores program instructions and data 210 as well as various AI/ML models 223 to control the operations of device 201.

Similarly, for wireless device 211 (e.g., a receiving device), antennae 217 and 218 transmit and receive RF signals. RF transceiver module 216, coupled with the antennae, receives RF signals from the antennae, converts them to baseband signals and sends them to processor 213. The RF transceiver 216 also converts received baseband signals from the processor, converts them to RF signals, and sends out to antennae 217 and 218. Processor 213 processes the received baseband signals and invokes different functional modules and circuits to perform features in wireless device 211. Memory 212 stores program instructions and data 220 as well as various AI/ML models 233 to control the operations of the wireless device 211.

The wireless devices 201 and 211 also include several functional modules and circuits that can be implemented and configured to perform embodiments of the present invention. In the example of Figure 2, wireless device 201 is a base station that includes a protocol stack 222, a configuration and control handling module 205, a scheduler 204, a mobility handling circuit 209, and an AI model lifecycle management (LCM) circuit 221. Wireless device 211 is a UE that includes a protocol stack 232, a configuration and control handling module 215, a mobility handling circuit 214, a connection handling circuit 219, and an LCM circuit 231.

Note that a wireless device may be both a transmitting device and a receiving device. The different functional modules and circuits can be implemented and configured by software, firmware, hardware, and any combination thereof. Each functional module or circuit may comprise a processor with corresponding program codes. The function modules and circuits, when executed by the processors 203 and 213 (e.g., via executing program codes 210 and 220), allow transmitting device 201 and receiving device 211 to perform embodiments of the present invention. In one example, AI/ML models are efficiently stored, encoded, configured, monitored, transferred, delivered, and updated, e.g., via LCM 221 and LCM 231. Moreover, the gNB and the UE communicate and maintain the same AI/ML models for suitable wireless operations.

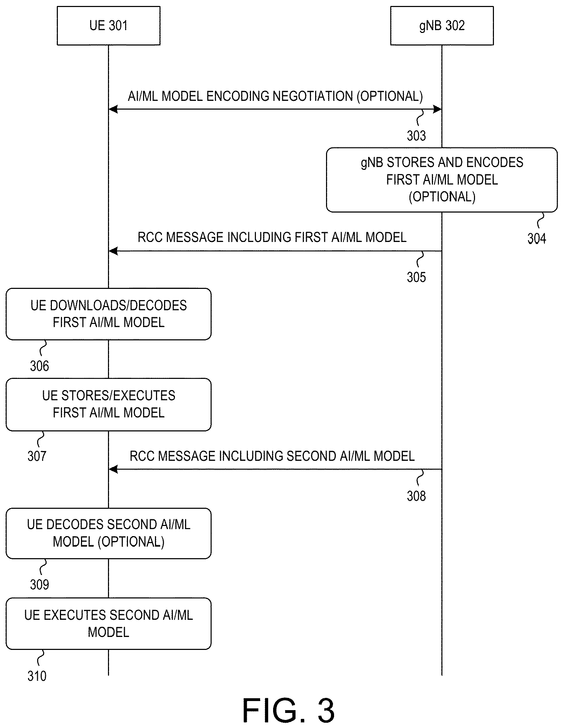

Figure 3 illustrates an AI/ML model communication procedure between one or more UEs and a base station (gNB) with model storage, compression, and delivery. An AI/ML model utilized by the UE and gNB includes a Convolution Neural Network (CNN), a Recurrent Neural Network (RNN), a Long Short Term Memory (LSTM), or a Transformer. The major hyper-parameters for these models include: 1) CNN: Size of kernels, number of kernels, length of strides, pooling size, weights etc.; 2) RNN: Number of layers, number of nodes in each layer, activation functions, learning rate, batch size, regularization parameters, dropout rate, optimizer choice, weight initialization methods etc; 3) LSTM: Number of hidden layers, number of LSTM units in each layer, learning rate, batch size, dropout rate, weights etc; and 4) Transformer: Learning rate, number of training epochs, weights etc.

In step 303, UE 301 negotiates an AI/ML model encoding method with gNB 302. The negotiation may be based on a variety of factors, such as environment, performance, capacity, processing resources, memory resources, and AI/ML model size. In one embodiment, when network bandwidth is not constrained, it may be beneficial to not encode the AI/ML model so to reduce UE 301 processing time and power consumption. In another embodiment, when network bandwidth is highly constrained, it may be beneficial to encode the AI/ML model so to reduce the necessary bandwidth to transmit the AI/ML model.

In step 304, a first AI/ML model is stored and compressed by gNB 302. This compression and encoding may be based on the optional encoding negotiation of step 303. Alternatively, the encoding of step 304 may be based on a predetermined encoding scheme that was not negotiated with the UE 301. In one embodiment, the first AI/ML model is compressed or encoded using a set of weights included in the first AI/ML model, and there are various ways to perform these weight compressions. Some examples include: 1) a Binary Weight Network (BNN): Every weight is converted to either 0 or 1 depending on a threshold; e.g., higher than threshold = 1, lower = 0; 2) a Ternary Weight Network (TNN), Each weight parameter in the model is either converted to -1, 0 or 1 using a threshold value of the weight "Δ", and a separate scaling factor *α* (with full precision) that scales the weights to smaller set space; 3) a B-bit compression, instead of 1-bit binary quantization, b-bit compression is also sometimes utilized; or 4) a K-means Clustering, a model sparsification, a Huffman Coding, or a Golomb Coding, data point is approximated using the nearest cluster center. Note that besides compression, model sparsification, i.e., share weights larger than a threshold and not sharing weights lower than the threshold, can be used. Alternatively,_model encoding using popular coding schemes, e.g., Huffman Coding or Golomb Coding can be used.

In step 305, the first AI/ML model is communicated to the UE 301 via a radio resource control (RCC) message, or via multiple RRC messages if the content of the AI/ML model is large. The RCC message may be an RRCsetupcomplete message or an RRCreconfigurationcomplete message. In step 306, UE 301 downloads the first AI/HL model. If the first AI/ML model was encoded before transmission, then UE 301 decodes the first AI/ML model. In step 307, the UE 301 executes the first AI/ML model.

AI/ML models may be updated from time to time. In step 308, a second AI/ML model is received from gNB 302 via another RCC message. In step 309, the UE 301 determines that the second AI/ML model has been received and decodes the second AI/ML model if the model was encoded before transmission. In step 310, the UE 301 executes the second AI/ML model. In this fashion, the gNB 302 can control the AI/ML model executing on the UE 301. Moreover, the gNB can configure, activate, deactivate the AI/ML models, and therefore is able to enable or disable the AI/ML model executing on UE 301.

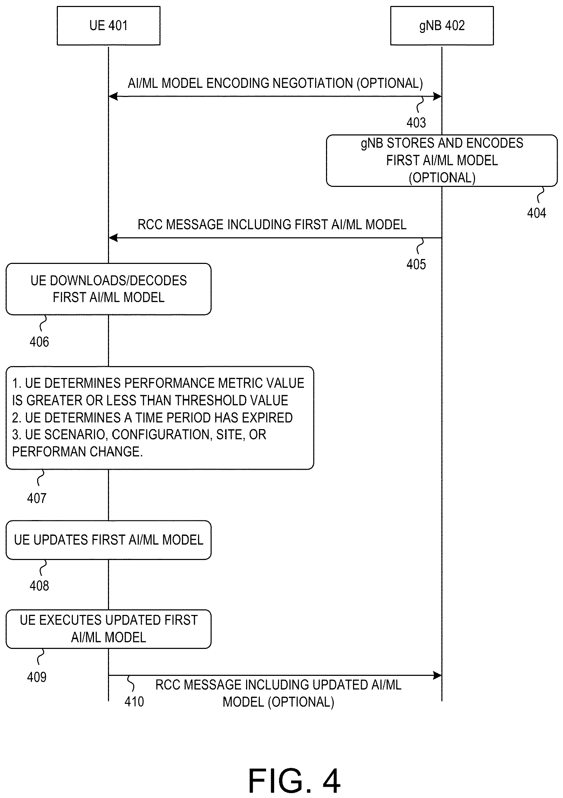

Figure 4 illustrates an AI/ML model communication procedure between one or more UEs and a base station (gNB) with performance metric based AI/ML management, periodic AI/ML model updating, and UE environment based AI/ML model updating. In step 403, UE 401 negotiates an AI/ML model encoding method with gNB 402. The negotiation may be based on a variety of factors, such as environment, performance, capacity, processing resources, memory resources, and AI/ML model size. Step 403 is optional. In one embodiment, when network bandwidth is not constrained, it may be beneficial to not encode the AI/ML model so to reduce UE 401 processing time and power consumption. In another embodiment, when network bandwidth is highly constrained, it may be beneficial to encode the AI/ML model so to reduce the necessary bandwidth to transmit the AI/ML model.

In step 404 a first AI/ML model is stored and compressed by gNB 402. This compression and encoding may be based on the option encoding negotiation of step 403. Alternatively, the encoding of step 404 may be based on a predetermined encoding scheme that was not negotiated with the UE 401. This encoding is optional. In step 405, the first AI/ML model is communicated to the UE 401 via a radio resource control (RCC) message. The RCC message may be an RRCsetupcomplete message or an RRCreconfigurationcomplete message. In step 406, UE 401 downloads the first AI/HL model. If the first AI/ML model was encoded before transmission, then UE 401 decodes the first AI/ML model. In step 407, the UE 401 determines whether the first AI/ML model needs to be updated.

In a first embodiment, the update is based on whether a performance metric value is greater than or less than a threshold value. The performance metric value may be a Block Error Rate (BLER) value, an Uplink Packet Throughput (UPT) value, a predicted accuracy value, a below user-specific threshold value, or a below application-specific threshold value. Any of these performance metric values may indicate the first AI/ML model is not performing optimally. Moreover, these performance metric values may indicate that operating or environmental factors have changed such that the first AI/ML model is no longer relevant to the new operating or environmental factors. In step 408, the UE updates the first AI/ML model based on learned data observed and collected by the UE 401. In step 409, the UE 401 executes the updated first AI/ML model. UE 401 may loop back to step 407 and monitors performance metric values to determine if they are greater than or less than a threshold value, thereby triggering another update of the first AI/ML model.

In a second embodiment, the UE 401 determines that a period of time has expired. This may be performed using a clock that is reset when a new AI/ML model execution begins. In step 408, upon expiration of the clock, UE 401 updates the first AI/ML model based on learned data observed and collected by the UE 401. In step 409, UE 401 executes the updated first AI/ML model. In one embodiment, step 409 may loop back to step 407 and the UE 401 waits for the time period to expire, thereby triggering another update of the first AI/ML model on a periodic schedule. In this fashion, the UE 401 is able to consistently create an updated AI/ML model based on a wide array of variables that may change over time.

In a third embodiment, UE 401 determines that a UE scenario, configuration, site location, or performance metric has changed. In a first example, the AI/ML model is updated when UE changes from one site to another and UE does not store the site-specific model. In a second example, the AI/ML model is updated when the configurations (e.g. beam pattern) is changed and UE does not have the applicable AI/ML model. In a third example, the AI/ML model is updated when the network/UE detects that the AI/ML model performance degrades, e.g. the BLER, UPT is below a threshold, where the threshold is user or application specific. In a fourth example, the AI/ML model is updated when the network/UE detects that the AI/ML model performance degrades, e.g. the predicted accuracy is below a threshold, where the threshold is user or application specific.

In one specific embodiment, this may be performed using a variety of data collected by the UE. For example, the UE may collect location data using a GPS circuit included in the UE. When the UE determines that the UE location has changed from a first site to a second site, the UE can set a flag indicating that a change has occurred. Likewise, when a UE configuration is changed on the UE, the UE may set the flag indicating that a change has occurred.

In step 408, upon the determination of a change occurring, UE 401 updates the first AI/ML model based on learned data observed and collected by UE 401. In step 409, UE 401 executes the updated first AI/ML model. In one embodiment, step 409 may loop back to step 407 and UE 401 checks for another change occurrence, thereby triggering another update of the first AI/ML model based on a change occurring. In this fashion, UE 401 is able to consistently create an updated AI/ML model based on a wide array of changes that may occur over time.

In step 410, the updated first AI/ML model is communicated to the gNB 402 via an RCC message. In this fashion, the UE 401 is able to determine how the AI/ML model is performing, and update the AI/ML model when the model is not performing within a predetermined range, or when a change has occurred. UE 401 may also periodically update the AI/ML model on a predetermined schedule. Moreover, the updated AI/ML model is synced with the AI/ML model stored on the gNB 402.

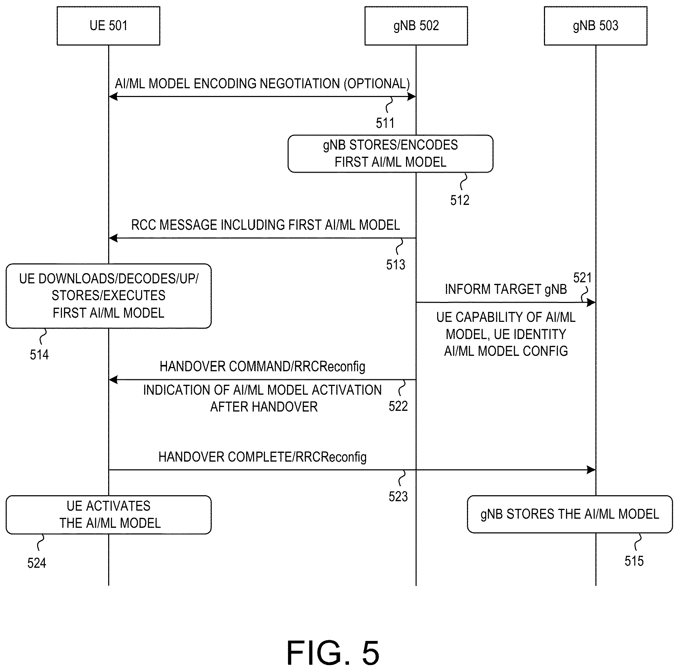

Figure 5 illustrates an AI/ML model communication procedure between one or more UEs, a first base station, and a second base station with mobility support and handover operation. In step 511, UE 501 negotiates an AI/ML model encoding method with source gNB 502. In step 512, a first AI/ML model is stored and compressed by source gNB 502. In step 513, the first AI/ML model is communicated to the UE 501 via a radio resource control (RCC) message. The RCC message may be an RRCsetupcomplete message or an RRCreconfigurationcomplete message. In step 514, UE 501 downloads, decodes, stores, compiles/converts and executes the first AI/HL model.

In step 521, for mobility, the source gNB performs handover preparation with target gNB 503. The source gNB informs the target gNB the following information: UE capabilities of AI/ML model, identification information about UE type or UE vendor or type of modem/chipset in use, activated and configured AI/ML models. In step 522, the source gNB 502 sends a handover command to UE 501. The handover command comprises an indication of whether the AI/ML model should be activated after handover, and if so, the activated and configured AI/ML models. In step 523, UE 501 sends a handover complete message to the target gNB 503. In step 524, UE 501 activates the AI/ML model based on the indication carried by the HO command. In step 525, the target gNB 503 stores the same AI/ML model based on the information provided by the source gNB 502 during HO preparation. As a result, the UE and gNB maintain the same AI/ML model for suitable operation.

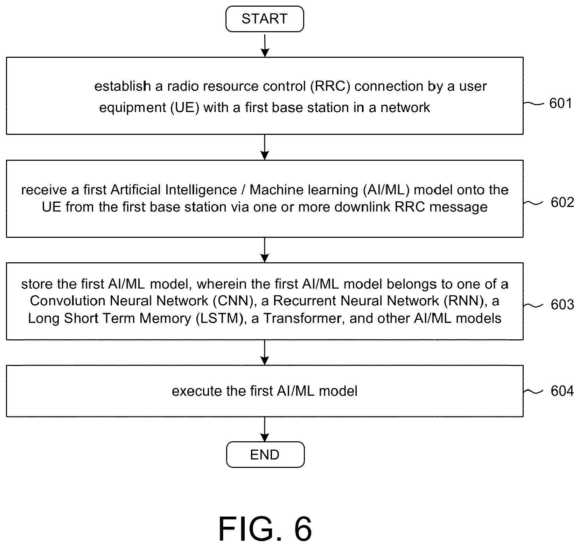

Figure 6 is a flow chart of a method of performing (AI/ML) model management and deployment from UE perspective in accordance with one novel aspect. In step 601, a radio resource control (RRC) connection is established by a user equipment (UE) with a base station in a network. In step 602, a first AI/ML model is received onto a UE from the base station via one or more downlink RRC messages. In step 603, the first AI/ML model is stored in a memory included in the UE, wherein the first AI/ML model belongs to one of a Convolution Neural Network (CNN), a Recurrent Neural Network (RNN), a Long Short Term Memory (LSTM), a Transformer, and other AI/ML models. In step 604, the first AI/ML model stored in memory is executed.

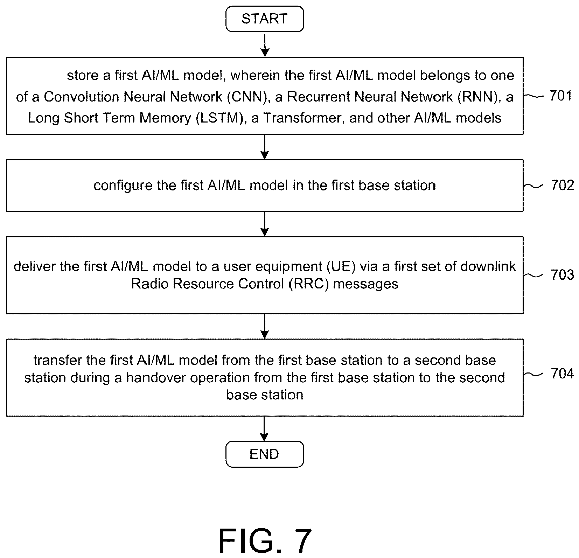

Figure 7 is a flow chart of a method of performing (AI/ML) model management and deployment from BS perspective in accordance with one novel aspect. In step 701, a first base station stores a first AI/ML model, wherein the first AI/ML model belongs to one of a Convolution Neural Network (CNN), a Recurrent Neural Network (RNN), a Long Short Term Memory (LSTM), a Transformer, and other AI/ML models. In step 702, the first base station configures the first AI/ML model in the first base station. In step 703, the first base station delivers the first AI/ML model to a user equipment (UE) via a first set of downlink Radio Resource Control (RRC) messages. In step 704, the first base station transfers the first AI/ML model from the first base station to a second base station during a handover operation from the first base station to the second base station.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method comprising:
establishing a radio resource control, in the following also referred to as RRC, connection by a user equipment (UE) with a first base station in a network (601);
receiving a first Artificial Intelligence / Machine learning, in the following also referred to as AI/ML, model onto the UE from the first base station via one or more downlink RRC messages (602);
storing the first AI/ML model, wherein the first AI/ML model belongs to one of a Convolution Neural Network, in the following also referred to as CNN, a Recurrent Neural Network, in the following also referred to as RNN, a Long Short Term Memory, in the following also referred to as LSTM, a Transformer, and other AI/ML models (603); and
executing the first AI/ML model (604).

2. The method of Claim 1, further comprising:
negotiating an AI/ML model encoding method, wherein the negotiating is between the UE and the first base station.

3. The method of Claim 2, further comprising:
decompressing the first AI/ML model based on the negotiated AI/ML encoding method.

4. The method of Claim 3, wherein the decompressing of the first AI/ML model includes decompressing or decoding a set of weights included in the first AI/ML model utilizing at least one of a Binary Weight Network, in the following also referred to as BNN, a Ternary Weight Network, in the following also referred to as TNN, a B-bit compression, a K-means Clustering, a model sparsification, a Huffman Coding, and a Golomb Coding.

5. The method of any one of Claims 1 to 4, further comprising:
updating the first AI/ML model when a second AI/ML model is received from a second base station, wherein the first base station communicates one or more characteristics of the first AI/ML model to the second base station during a handover procedure.

6. The method of any one of Claims 1 to 5, further comprising:
updating the first AI/ML model when a performance metric value is greater or less than a threshold value.

7. The method of Claim 6, wherein the performance metric value is a Block Error Rate, in the following also referred to as BLER, value, an Uplink Packet Throughput, in the following also referred to as UPT, value, a predicted accuracy value, a below user-specific threshold value, or a below application-specific threshold value.

8. The method of any one of Claims 1 to 7, further comprising:
updating the first AI/ML model in response to a scenario change, a configuration change, a site change, or a performance metric change.

9. A User Equipment (211), in the following also referred to as UE, comprising:
a radio resource control, in the following also referred to as RRC, connection handling circuit (219) that establishes an RRC connection with a first base station (201);
a receiver circuit (216) that receives a first Artificial Intelligence / Machine Learning, in the following also referred to as AI/ML, model that is broadcasted or groupcasted to multiple UEs by the first base (201) station via one or more downlink RRC messages;
a memory circuit (212) that stores the first AI/ML model, wherein the first AI/ML model belongs to one of a Convolution Neural Network, in the following also referred to as CNN, a Recurrent Neural Network, in the following also referred to as RNN, a Long Short Term Memory, in the following also referred to as LSTM, a Transformer, and other AI/ML models; and
a processor circuit (213) that executes the first AI/ML model.

10. The UE (211) of Claim 9, wherein the UE (211) negotiates an AI/ML model encoding method, wherein the negotiation is performed between the UE and the first base station;
wherein preferably the UE decompresses the first AI/ML model before executing the first AI/ML model;
wherein further preferably the decompressing of the first AI/ML model includes decompressing or decoding a set of weights included in the first AI/ML model utilizing at least one of a Binary Weight Network, in the following also referred to as BNN, a Ternary Weight Network, in the following also referred to as TNN, a B-bit compression, a K-means Clustering, a model sparsification, a Huffman Coding, and a Golomb Coding.

11. The UE (211) of Claim 9 or 10, wherein the UE (211) receives a second AI/ML model from a second base station, wherein the UE executes the second AI/ML model in response to receiving the second AI/ML model from the second base station, and wherein the first base station communicates one or more characteristics of the first AI/ML model to the second base station during a handover procedure.

12. The UE (211) of any one of Claims 9 to 11, wherein the UE (211) updates the first AI/ML model when a performance metric value is greater or less than a threshold value,
wherein preferably the performance metric value is a Block Error Rate, in the following also referred to as BLER, value, an Uplink Packet Throughput, in the following also referred to as UPT, value, a predicted accuracy value, a below user-specific threshold value, or a below application-specific threshold value; and/or
wherein the UE (211) updates the first AI/ML model in response to a scenario change, a configuration change, a site change, or a performance metric change.

13. A method for improving the efficiency of wireless communications in 5G/6G networks by using artificial intelligence and machine learning, in the following also referred to as AI/ML, models, the method comprising:
storing a first AI/ML model in a first base station, wherein the first AI/ML model belongs to one of a Convolution Neural Network, in the following also referred to as CNN, a Recurrent Neural Network, in the following also referred to as RNN, a Long Short Term Memory, in the following also referred to as LSTM, a Transformer, and other AI/ML models (701);
configuring the first AI/ML model in the first base station (702);
delivering the first AI/ML model to a user equipment device, in the following also referred to as UE, via a first set of downlink Radio Resource Control, in the following also referred to as RRC, messages (703); and
transferring the first AI/ML model from the first base station to a second base station during a handover operation from the first base station to the second base station (704) .

14. The method of Claim 13, wherein the first base station communicates a second AI/ML model to the UE via a second set of downlink RRC messages.

15. The method of Claim 13 or 14, wherein during the handover operation, the first base station provides the second base station with an indicator indicating a set of capabilities of the first AI/ML model, and identification information indicating at least one of a UE type, a UE vendor, a UE modem type, and a UE chipset; and/or
wherein during the handover operation, the first base station communicates an AI/ML indicator that indicates if the first AI/ML model is to be activated.
